(19) Europäisches Patentamt
European Patent Office
Office européen des brevets

(11) **EP 4 712 288 A1**

(12) **EUROPEAN PATENT APPLICATION**
published in accordance with Art. 153(4) EPC

(43) Date of publication:
**18.03.2026   Bulletin 2026/12**

(51) International Patent Classification (IPC):
**H02J 3/28** (2026.01)

(21) Application number: **23937186.7**

(86) International application number:
**PCT/CN2023/117942**

(22) Date of filing: **11.09.2023**

(87) International publication number:
**WO 2024/234510 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **12.05.2023   CN 202310538743**

(71) Applicant: **Sungrow Power Supply (Nanjing) Co.,
Ltd
Nanjing, Jiangsu 210012 (CN)**

(72) Inventors:
• **HUANG, Tiangang
Nanjing, Jiangsu 210012 (CN)**
• **DONG, Chen
Nanjing, Jiangsu 210012 (CN)**
• **XIA, Yanhui
Nanjing, Jiangsu 210012 (CN)**

(74) Representative: **Epping - Hermann - Fischer
Patentanwaltsgesellschaft mbH
Schloßschmidstraße 5
80639 München (DE)**

(54) **GRID-FORMING ENERGY STORAGE SYSTEM AND CONTROL METHOD THEREFOR**

(57)     The present application provides a grid-forming energy storage system and a control method therefor. The control method comprises: monitoring the frequency and voltage at a point of common coupling (PCC), and when the frequency and/or the voltage at the PCC exceeds a limit, determining, according to changes in active and reactive power of a system, additional values of active and reactive power of each grid-forming energy storage device connected to a grid by means of the PCC; then, correspondingly layering the additional values of the active and reactive power of each grid-forming energy storage device and response values of the active and reactive power thereof, respectively, to serve as power instruction values for active and reactive power control of each grid-forming energy storage device; further, on the basis that each grid-forming energy storage device is capable of responding to a frequency and voltage disturbance in a local range of the grid-forming energy storage device, from the perspective of the system, by sending the additional values of the active and reactive power, layering a response required for the frequency and/or voltage disturbance at the PCC onto each grid-forming energy storage device, thus further ensuring the stability of the frequency and the voltage at the PCC.

FIG. 2

## Description

The present disclosure claims the priority to Chinese Patent Application No. 202310538743.3, titled "GRID-FORMING ENERGY STORAGE SYSTEM AND CONTROL METHOD THEREFOR", filed on May 12, 2023 with the China National Intellectual Property Administration, which is incorporated herein by reference in its entirety.

## FIELD

The present disclosure relates to the technical field of grid-connection control, and in particular to a grid-forming energy storage system and a control method therefor.

## BACKGROUND

The conventional converter mostly adopts a grid-following (GFL) control mode, which measures phase information at a point of common coupling (PCC) via a phase-locked loop (PLL) to implement synchronization with a power grid. However, this control mode has a poor stability in a weak power grid.

With the increasingly widespread application of renewable energy and power electronic devices, the power system has a trend of reducing inertia and weakening system strength, resulting in more severe stability challenges. Grid-forming (GFM) control technology can enhance the voltage and frequency support capabilities of converters, thereby improving power system stability. Hence, in the grid with weak strength and low physical inertia, converters preferably operate in the GFM control mode.

A grid-connected converter in the GFM control mode is based on the Virtual Synchronous Generator (VSG) power synchronization strategy, which can provide inertia support for energy storage apparatuses and facilitate the rapid adjustment of active and reactive power. However, this scheme only responds to frequency and voltage disturbances of the energy storage apparatus in a certain range. In a system including multiple energy storage apparatuses with VSG functions, how to coordinate the active and reactive power of each energy storage apparatus to maintain the stability of frequency and voltage of the energy storage system at the PCC is an urgent issue to be addressed.

## SUMMARY

A grid-forming energy storage system and a control method therefor are provided according to the present disclosure, to ensure the stability of frequency and voltage at the PCC.

To achieve the foregoing objective, the following technical solutions are provided according to the present disclosure.

In a first aspect of the present disclosure, a control method for a grid-forming energy storage system is provided, where the grid-forming energy storage system includes at least two grid-forming energy storage apparatuses connected to a power grid through a point of common coupling (PCC); and the control method for the grid-forming energy storage system includes:

monitoring a frequency and a voltage at the PCC;

determining whether the frequency and the voltage at the PCC are off-limit;

determining, based on changes in active power and reactive power of the grid-forming energy storage system, an active-power additional value and a reactive-power additional value of each of the grid-forming energy storage apparatuses, in response to the frequency at the PCC and/or the voltage at the PCC being off-limit; and

for each grid-forming energy storage apparatus, calculating an indicated value of an active power control by adding the active-power additional value of the grid-forming energy storage apparatus to an active-power response value of the grid-forming energy storage apparatus, and calculating an indicated value of a reactive power control by adding the reactive-power added value of the grid-forming energy storage apparatus to a reactive-power response value of the grid-forming energy storage apparatus.

In an embodiment, the determining, based on changes in active power and reactive power of the grid-forming energy storage system, an active-power additional value and a reactive-power additional value of each of the grid-forming energy storage includes:

determining an active power surge ratio and a reactive power surge ratio of a system load, based on the changes in the active power and the reactive power of the grid-forming energy storage system;

determining a cooperative control strategy based on the active power surge ratio and the reactive power surge ratio; and

determining the active-power additional value and the reactive-power additional value of each of the grid-forming energy storage apparatuses based on the cooperative control strategy.

In an embodiment, the determining the active power surge ratio and the reactive power surge ratio of the system load, based on the changes in the active power and the reactive power of the grid-forming energy storage system includes:

determining a total active power and a total reactive power total amount of the system load in a steady-state stage before a disturbance occurs, where the disturbance corresponds to the frequency at the PCC being off-limit and/or the voltage at the PCC being limit-off;

determining an active power surge amount and a reactive power surge amount of the system load at a moment when the disturbance occurs; and

determining a ratio of the active power surge amount to the total active power as the active power surge ratio; and determining a ratio of the reactive power surge amount to the total reactive power as the reactive power surge ratio.

In an embodiment, the determining a cooperative control strategy based on the active power surge ratio and the reactive power surge ratio includes:

determining whether the active power surge ratio is greater than a first preset threshold, and determining whether the reactive power surge ratio is greater than a second preset threshold;

determining the cooperative control strategy as a voltage-regulation priority strategy, in response to only the reactive power surge ratio being greater than the second preset threshold; and

determining the cooperative control strategy as a frequency-regulation priority strategy, in response to both the active power surge ratio being greater than the first preset threshold and the reactive power surge ratio being greater than the second preset threshold, or in response to both the active power surge ratio being smaller than or equal to the first preset threshold and the reactive power surge ratio being smaller than or equal to the second preset threshold, or in response to the active power surge ratio being greater than the first preset threshold and the reactive power surge ratio being smaller than or equal to the second preset threshold.

In an embodiment, the determining the active-power additional value and the reactive-power additional value of each grid-forming energy storage apparatus based on the cooperative control strategy includes:

determining a total active power output of the grid-forming energy storage apparatuses based on an active power-frequency droop control; and determining, in the cooperative control strategy, a total reactive power output of the grid-forming energy storage apparatuses based on a reactive power-voltage droop control;

distributing the total active power output to the respective grid-forming energy storage apparatuses based on a first predetermined distribution method to obtain the active-power additional values of the respective grid-forming energy storage apparatuses; and

distributing the total reactive power output to the respective grid-forming energy storage apparatuses based on a second predetermined distribution method to obtain the reactive-power additional values of the respective grid-forming energy storage apparatuses.

In an embodiment, the determining a total active power output of the grid-forming energy storage apparatuses based on an active power-frequency droop control includes:

calculating a product of a frequency droop coefficient and a difference between a rated frequency at the PCC and a monitored frequency; and

determining a sum of the product and a setting value of a total active power output of the grid-forming energy storage system in the steady-state stage, as the total active power output.

In an embodiment, the determining, in the cooperative control strategy, a total reactive power output of the grid-forming energy storage apparatuses based on a reactive power-voltage droop control includes:

calculating a product of a voltage droop coefficient and a difference between a rated voltage at the PCC and a monitored voltage; and

determining a difference between a setting value of a total reactive power output of the grid-forming energy storage system in the steady-state stage and the product, as the total reactive power output, in response to the cooperative control strategy being the frequency-regulation priority strategy; and

determining a sum of the setting value of the total reactive power output of the grid-forming energy storage system in the steady-state stage and the product, as the total active power output, in response to the cooperative control strategy being the voltage-regulation priority strategy.

In an embodiment, the first predetermined distribution method includes an average distribution method.

In an embodiment, the second predetermined distribution method includes a proportional distribution method based on differences in terminal voltage and rated voltage of grid-forming energy storage apparatuses.

In an embodiment, the determining whether the frequency and the voltage at the PCC are off-limit includes:

determining whether the frequency at the PCC is within a preset frequency range, and whether the voltage at the PCC is within a preset voltage range;

determining that the frequency at the PCC is off-limit, in response to the frequency at the PCC outside the preset frequency range; and

determining that the voltage at the PCC is off-limit, in response to the voltage at the PCC outside the preset voltage range.

In an embodiment, the preset frequency range is ±0.3Hz centered around a grid frequency; and the preset voltage range is between 0.9 times and 1.1 times a rated voltage at the PCC.

In a second aspect, a grid-forming energy storage system is provided according to the present disclosure. The grid-forming energy storage system includes: a power plant controller and at least two grid-forming energy storage apparatuses.

The grid-forming energy storage apparatuses are connected to a power grid through a PCC; and

The grid-forming energy storage apparatuses are controlled by the power plant controller, and the power plant controller is configured to execute any one of the control method for the grid-forming energy storage system according to the first aspect.

In an embodiment, each of the grid-forming energy storage apparatuses includes a grid-forming converter and an energy storage device; and the energy storage device is connected to the PCC via the grid-forming converter.

In an embodiment, each of the grid-forming energy storage apparatuses further includes: a power generation device; and the power generation device is connected to the PCC via the grid-forming converter or another grid-forming converter.

In the control method for the grid-forming energy storage system provided in the present disclosure the frequency and the voltage at the PCC is monitored to determine whether the frequency and the voltage at the PCC are off-limit. An active-power additional value and a reactive-power additional value of each of the grid-forming energy storage connected to the power grid are determined, based on changes in the active power and the reactive power of the grid-forming energy storage system, in response to the frequency and/or the voltage at the PCC being off-limits. Then, an indicated value of an active power control for each grid-forming energy storage apparatus is calculated by adding the active-power additional value of the grid-forming energy storage apparatus to the active-power response value of the grid-forming energy storage apparatus, and an indicated value of a reactive power control for the grid-forming energy storage apparatus is calculated by adding the reactive-power additional value of the grid-forming energy storage apparatus to the reactive-power response value of the grid-forming energy storage apparatus. In this way, each grid-forming energy storage apparatus can provide a response to frequency and voltage disturbances within its local area. In addition, the system can issue the active-power additional value and the reactive-power additional value which corresponds to the required response to the frequency and/or voltage disturbances at the PCC. The active-power additional value and the reactive-power additional value are applied to the response of each grid-forming energy storage apparatus, to ensure the stability of the frequency and voltage at the PCC.

**BRIEF DESCRIPTION OF THE DRAWINGS**

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.

FIG. 1 is a schematic structural diagram of a grid-forming energy storage system according to an embodiment of the present disclosure;

FIG. 2 is a flowchart of a control method for a grid-forming energy storage system according to an embodiment of the present disclosure;

FIG. 3 is another flowchart of a control method for a grid-forming energy storage system according to an embodiment of the present disclosure;

FIG. 4 is a part of a flowchart of a control method for a grid-forming energy storage system according to an embodiment of the present disclosure;

FIG. 5 is another part of a flowchart of a control method for a grid-forming energy storage system according to an embodiment of the present disclosure;

FIG. 6 is another part of a flowchart of a control method for a grid-forming energy storage system according to an embodiment of the present disclosure;

FIG. 7 is a frequency waveform diagram at the PCC under a centralized plus distributed control scheme and a conventional distributed control scheme when a frequency-regulation priority control strategy is adopted, according to an embodiment of the present disclosure;

FIG. 8 is a voltage waveform diagram at the PCC under a centralized plus distributed control scheme and a conventional distributed control scheme when a frequency-regulation priority control strategy is adopted, according to an embodiment of the present disclosure;

FIG. 9 is a frequency waveform diagram at the PCC under a centralized plus distributed control scheme and a conventional distributed control scheme when a voltage-regulation priority control strategy is adopted, according to an embodiment of the present disclosure; and

FIG. 10 is a voltage waveform diagram at the PCC under a centralized plus distributed control scheme and a conventional distributed control scheme when a voltage-regulation priority control strategy is adopted, according to an embodiment of the present disclosure.

## DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure, without any creative effort, shall fall within the protection scope of the present disclosure.

The terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

A control method for a grid-forming energy storage system is provided according to the present disclosure to ensure the stability of frequency and voltage at the PCC.

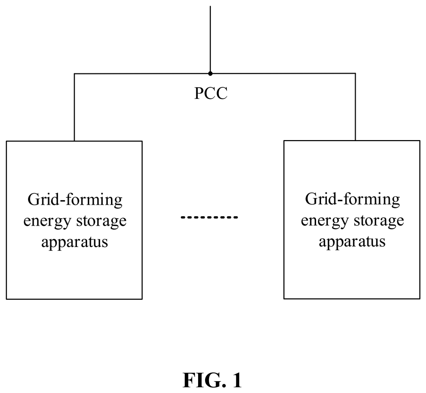

Referring to FIG. 1, the grid-forming energy storage system includes at least two grid-forming energy storage apparatuses. The grid-forming energy storage apparatuses are connected to a power grid through a common PCC, which are distributed in the system in a dispersed manner and can respond to disturbances of frequency and voltage within their respective local ranges.

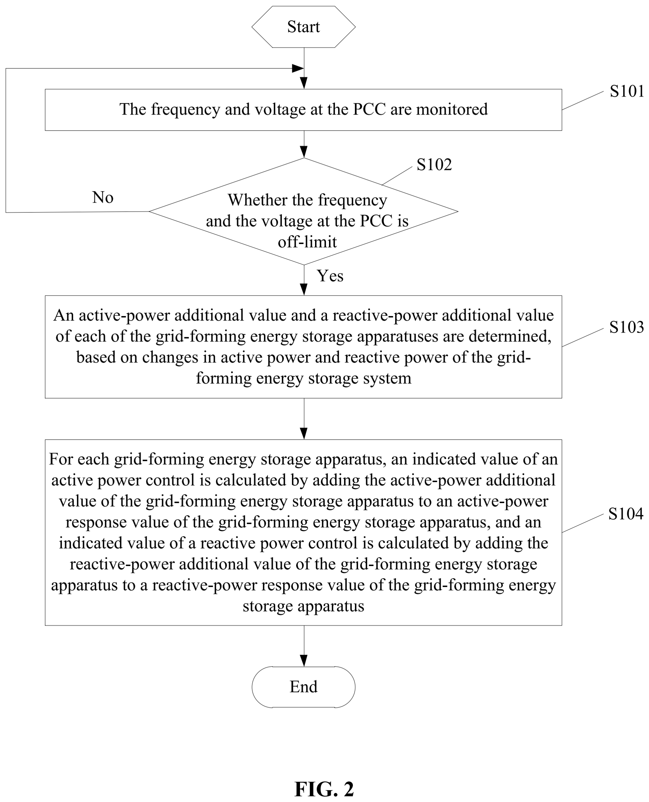

The control method for the grid-forming energy storage system, as shown in FIG. 2, includes S101 to S104.

In S101, the frequency and voltage at the PCC are monitored.

In practical applications, this step may be executed in real-time or periodically, which depends on the specific application environment and is not limited herein.

In S102, it is determined whether the frequency and the voltage at the PCC are off-limit.

In an embodiment, the step may include: determining whether the frequency at the PCC is within a preset frequency range, and whether the voltage at the PCC is within a preset voltage range; determining that the frequency at the PCC is off-limit in response to the frequency at the PCC being outside the preset frequency range; and determining that the voltage at the PCC is off-limit in response to the voltage at the PCC being outside the preset voltage range.

In practical applications, the preset frequency range may be $\pm 0.3$Hz centered around the grid frequency. For example, when the grid frequency is 50Hz, the preset frequency range is [49.97 Hz, 50.03 Hz]. The above range is merely an example. In the practical application, and other ranges including the grid frequency may also be used, all of which fall within the protection scope of the present disclosure.

In addition, an upper limit and a lower limit of the preset voltage range may be 1.1p.u. and 0.9p.u., respectively; that is, between 0.9 and 1.1 times a rated voltage at the PCC. This range is only an example, which will not be limited to herein.

If the frequency and/or the voltage at the PCC are off-limit, that is, if at least one of the frequency or the voltage is off-limit, S103 is performed. If both the frequency and the voltage at the PCC are not off-limit, the process returns S101.

In S103, an active-power additional value and a reactive-power additional value of each of the grid-forming energy storage apparatuses are determined, based on changes in active power and reactive power of the grid-forming energy storage system.

Since the frequency relates to the active power of the system and the voltage relates to the reactive power of the system, the system power response required for the changes in the active power and the reactive power may be distributed to each grid-forming energy storage apparatus in the system to maintain the stability of frequency and voltage at the PCC. The specific distribution method is not limited. For example, the distribution method may be an equal distribution, or a proportion distribution according to the specific conditions of the grid-forming energy storage apparatuses, which depends on the specific application environment and all falls within the protection scope of the present disclosure.

In S104, for each grid-forming energy storage apparatus, an indicated value of an active power control is calculated by adding the active-power additional value of the grid-forming energy storage apparatus to an active-power response value of the grid-forming energy storage apparatus, and an indicated value of a reactive power control is calculated by adding the reactive-power additional value of the grid-forming energy storage apparatus to a reactive-power response value of the grid-forming energy storage apparatus.

In the conventional grid-forming energy storage apparatus, an active power response value may be used as the indicated value for performing an active power control on the conventional grid-forming energy storage apparatus, to respond to frequency disturbances within its local range; the reactive power response value may be used as the indicated value for performing a reactive power control on the conventional grid-forming energy storage apparatus, to respond to voltage disturbances within its local range. It should be noted that various methods may be adopted to determine the response values required for each grid-forming energy storage apparatus to respond to local voltage and frequency changes. Reference may be made to the conventional method, which will not be limited herein specifically.

In step S104, on the basis of each grid-forming energy storage apparatus responding to its local voltage and frequency changes, the active power additional value is added to the active power response value of the grid-forming energy storage apparatus, and the added result is determined as the indicated value of the active power control for the grid-forming energy storage apparatus; the reactive power additional value is added to the reactive power response value of the grid-forming energy storage apparatus, and the added result is determined as the indicated value of the reactive power control for the grid-forming energy storage apparatus, thereby achieving the system power response required for both the active and reactive power variations at the PCC to maintain frequency and voltage stability at the PCC.

In the control method for the grid-forming energy storage apparatus provided by the embodiments, based on the above principle, each grid-forming energy storage apparatus can provide a response to frequency and voltage disturbances within its local area. In addition, the system can issue the active-power additional value and the reactive-power additional value which corresponds to the required response to the frequency and/or voltage disturbances at the PCC. The active-power additional value and the reactive-power additional value are applied to the response of each grid-forming energy storage apparatus, to ensure the stability of the frequency and voltage at the PCC.

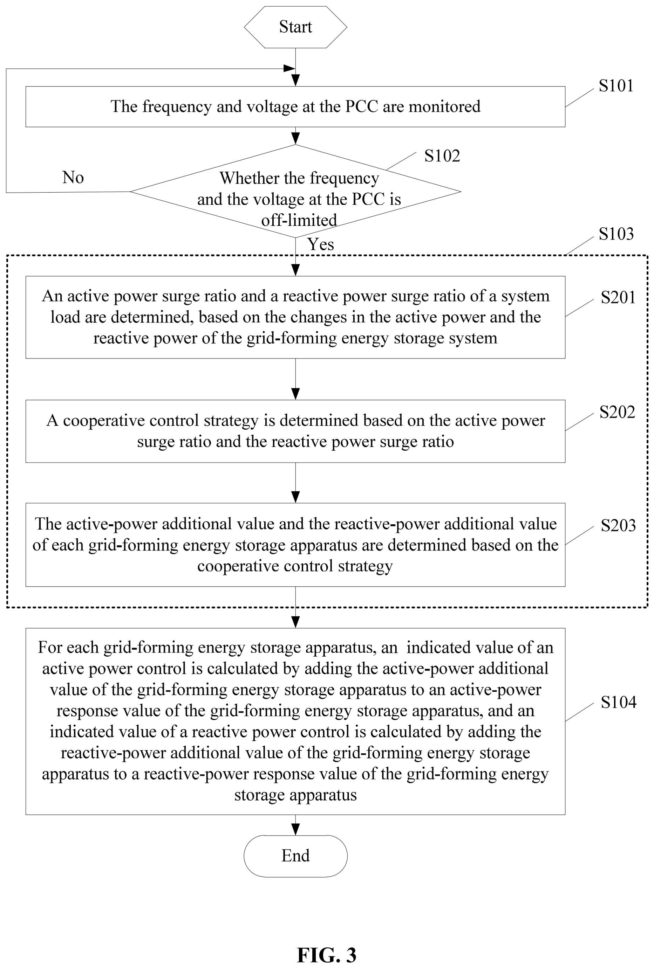

Based on the previous embodiment, some examples are provided to implement the step S103 in the control method for the grid-forming energy storage system in this embodiment. Specifically, S103 may include steps S201, S202, and S203, as shown in FIG. 3.

In S201, an active power surge ratio and a reactive power surge ratio of a system load are determined, based on the changes in the active power and the reactive power of the grid-forming energy storage system.

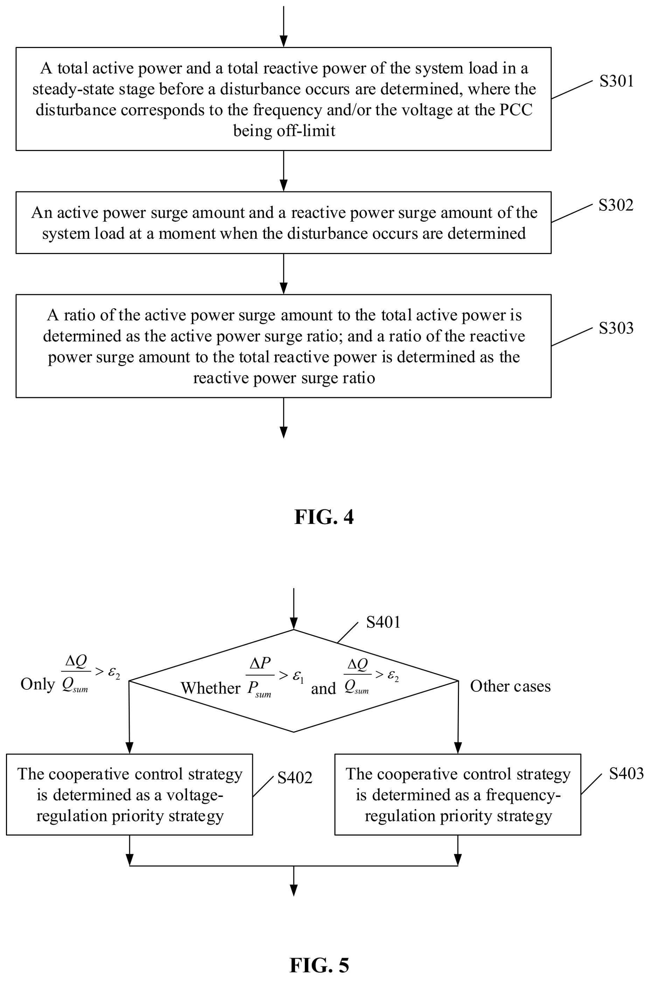

The process of determining the active power surge ratio and the reactive power surge ratio may specifically include steps S301 to S303 as shown in FIG. 4.

In S301, a total active power and a total reactive power of the system load in a steady-state stage before a disturbance occurs are determined, where the disturbance corresponds to the frequency and/or the voltage at the PCC being off-limit.

In S302, an active power surge amount and a reactive power surge amount of the system load at a moment when the disturbance occurs are determined.

In S303, a ratio of the active power surge amount to the total active power is determined as the active power surge ratio; and a ratio of the reactive power surge amount to the total reactive power is determined as the reactive power surge ratio.

That is, the total active power $P_{sum}$ and the total reactive power $Q_{sum}$ of the system load in the steady-state stage before the disturbance occurs are respectively determined in S301. The active power surge amount $\Delta P$ and the reactive power surge amount $\Delta Q$ at the moment when the disturbance occurs are determined in S302. The active power surge ratio $\dfrac{\Delta P}{P_{sum}}$ and the reactive power surge ratio $\dfrac{\Delta Q}{Q_{sum}}$ are obtained in S303.

After S201, S202 is executed.

In S202, a cooperative control strategy is determined based on the active power surge ratio and the reactive power surge ratio.

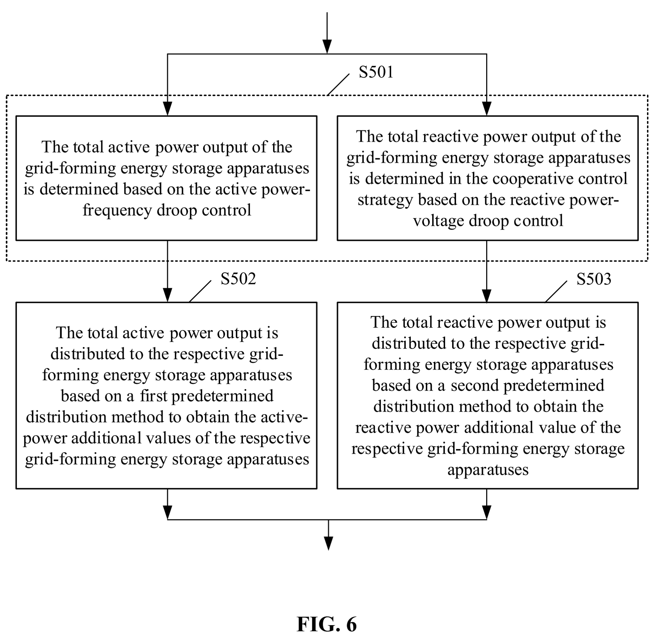

The process of determining the cooperative control strategy may specifically include S401 to S403 as shown in FIG. 5.

In S401, it is determined whether the active power surge ratio is greater than the first preset threshold, and it is determined whether the reactive power surge ratio is greater than the second preset threshold.

That is, it is determined whether $\dfrac{\Delta P}{P_{sum}} > \varepsilon_1$ and

$\dfrac{\Delta Q}{Q_{sum}} > \varepsilon_2$ ; where, $\varepsilon_1$ is the first preset threshold, and $\varepsilon_2$

is the second preset threshold. The specific values of the first preset threshold and the second preset threshold are not limited, which depend on the application environment.

Simulation shows that a slightly larger voltage deviation, such as no more than ± 0.05p.u., is acceptable, while the frequency is expected to be stabilized at the grid frequency. Therefore, in practical applications, the cooperative control strategy may prioritize the frequency regulation. Moreover, the voltage regulation is related to the reactive power. If the reactive power surge is too large, the voltage regulation is performed to maintain the voltage stability. The frequency regulation is related to the active power. If the active power maintain is too large, the frequency regulation is performed to maintain the frequency stability. If only the reactive power surge ratio is greater than the second preset threshold, that is,

only the condition $\dfrac{\Delta Q}{Q_{sum}} > \varepsilon_2$ is met, step S402 is executed; otherwise, such as only condition

$\dfrac{\Delta P}{P_{sum}} > \varepsilon_1$ is met, or both conditions $\dfrac{\Delta P}{P_{sum}} > \varepsilon_1$ and

$\dfrac{\Delta Q}{Q_{sum}} > \varepsilon_2$ are met, or $\dfrac{\Delta P}{P_{sum}} \le \varepsilon_1$ and

$\dfrac{\Delta Q}{Q_{sum}} \le \varepsilon_2$, step S403 is executed.

In S402, the cooperative control strategy is determined as a voltage-regulation priority strategy.

In S403, the cooperative control strategy is determined as a frequency-regulation priority strategy.

That is, in practical applications, based on the active power surge ratio and the reactive power surge ratio due to disturbances such as load switching, the cooperative control strategy is adaptively selected as the voltage-regulation priority strategy or the frequency-regulation priority strategy.

After S202, S203 is executed.

In S203, the active-power additional value and the reactive-power additional value of each grid-forming energy storage apparatus are determined based on the cooperative control strategy.

In practical applications, a total active power output of the grid-forming energy storage apparatuses may be determined through an active power-frequency droop control. A total reactive power output of the grid-forming energy storage apparatuses may be determined through a reactive power-voltage droop control. Then, the total active power output and reactive power output are distributed to the respective grid-forming energy storage apparatuses according to a preset distribution method. That is, step S203 may include steps of S501 to S503 as shown in FIG. 6.

In S501, the total active power output of the grid-forming energy storage apparatuses is determined based on the active power-frequency droop control; and the total reactive power output of the grid-forming energy storage apparatuses is determined in the cooperative control strategy based on the reactive power-voltage droop control.

To suppress frequency fluctuations of the system, the active power-frequency droop control is adopted. That is, the total active power output $P_{m.sum}$ of the energy storage apparatuses in the system during disturbance is obtained by determining a setting value $P_{m.set.sum}$ of the total active power of the energy storage apparatuses in the system during steady-state operation, combining the setting value of the total active power with the droop coefficient $K_f$ and the measured frequency $f$ at the PCC. The total active power output $P_{m.sum}$ of the energy storage apparatuses is expressed as: $P_{m.sum} = P_{m.set.sum} + K_f (f_n - f)$, where $f_n$ is a rated frequency.

That is, in step S501, the total active power output of the grid-forming energy storage apparatuses is determined based on the active power-frequency droop control. The process of step S501 may include: calculating a product of a frequency droop coefficient $K_f$ and a difference between the rated frequency $f_n$ at the PCC and a monitored frequency $f$; determining a sum of the product and the setting value of the total active power output of the system in the steady-state stage (that is, the setting value of the total active power output $P_{m.set.sum}$ of the energy storage apparatuses during steady-state operation) as the total active power output $P_{m.sum}$.

In addition, in order to suppress the voltage fluctuations of the system, the reactive power-voltage droop control is adopted. That is, the total reactive power output $Q_{e.sum}$ of the energy storage apparatuses in the system during disturbance is obtained by determining the setting value $Q_{set.sum}$ of the total reactive power output of the energy storage apparatuses in the system during the steady-state operation and combining the setting value $Q_{set.sum}$ of the total reactive power output with the droop coefficient $K_V$ and the measured voltage V at the PCC. The total reactive power output $Q_{e.sum}$ in the frequency-regulation priority strategy is calculated as: $Q_{e.sum} = Q_{set.sum} - K_V(V_n - V)$ ; where, $V_n$ is the rated voltage. In the voltage-regulation priority strategy, it is necessary to firstly guarantee the response to the voltage change at the PCC, to change the total reactive power output of the energy storage apparatuses. In this case, the total reactive power output $Q_{e.sum}$ is calculated as:

$$Q_{e.sum} = Q_{set.sum} + K_V \left( V_n - V \right).$$

That is, in step S501, the total reactive power output of the grid-forming energy storage apparatuses is determined in the cooperative control strategy based on the reactive power-voltage droop control by: calculating a product of a voltage droop coefficient $K_V$ and a difference between a rated voltage $V_n$ at the PCC and a monitored voltage V; and determining a difference between a setting value of a total reactive power output of the system in the steady-state stage (that is, the setting value $Q_{set.sum}$ of the total reactive power output of the energy storage apparatuses in the system during steady-state operation) and the product, as the total reactive power output $Q_{e.sum}$, in response to the cooperative control strategy being the frequency-regulation priority strategy; and determining a sum of the setting value of the total reactive power output of the system in the steady-state stage and the product as the total active power output $Q_{e.sum}$, in response to the cooperative control strategy being the voltage-regulation priority strategy.

After the total active power output $P_{m.sum}$ is determined, S502 is executed; and after the total reactive power output $Q_{e.sum}$ is determined, S503 is executed.

In S502, the total active power output is distributed to the respective grid-forming energy storage apparatuses based on a first predetermined distribution method to obtain the active-power additional values of the respective grid-forming energy storage apparatuses.

In an embodiment, the first predetermined distribution method may be an average distribution method. That is, after the total active power output $P_{m.sum}$ of the energy storage apparatuses is determined based on the active power-frequency droop control, the total active power output $P_{m.sum}$ is evenly distributed to the respective energy storage apparatuses. In this case, for the i-th energy storage apparatus, the active power additional value is calculated as: $P_{m.i} = \dfrac{P_{m.sum}}{N}$, where N is the total number of energy storage apparatuses in the system.

In practical applications, other distribution methods may also be used to distribute the total active power output $P_{m.sum}$. The above only provides an example of the distribution method, which is not limited herein.

In S503, the total reactive power output is distributed to the respective grid-forming energy storage apparatuses based on a second predetermined distribution method to obtain the reactive power additional value of the respective grid-forming energy storage apparatuses.

In an embodiment, the second predetermined distribution method may be a proportional distribution method based on differences in terminal voltages and rated voltages of the grid-forming energy storage apparatuses. For the i-th energy storage apparatus, the reactive-power additional value is calculated as:

$$Q_{e.i} = Q_{set.i} + \left(Q_{e.sum} - Q_{set.sum}\right)\frac{\left|U_i - U_n\right|}{\sum\limits_i \left|U_i - U_n\right|} \ ;$$

where $Q_{set.i}$ is the reactive power output of the i-th energy storage apparatus in the steady-state stage, $U_i$ is the terminal voltage of the i-th grid-forming energy storage apparatus and $U_n$ is a rated terminal voltage of each of the grid-forming energy storage apparatuses.

In practical applications, the total reactive power output $Q_{e.sum}$ may also be distributed in other distribution methods. The above distribution method is only an example which is not limited herein.

The obtained active-power additional value $P_{m.i}$ of the energy storage apparatus may be added to the active power response value thereof, and the obtained reactive-power additional value $Q_{e.i}$ of the energy storage apparatus, may be added to the reactive-power response value thereof, so as to ensure the stability of the frequency and voltage at the PCC. The active power response value and the reactive-power response value are caused by its response to the changes in frequency and voltage of this energy storage apparatus.

As can be seen from the above, the control method for the grid-forming energy storage apparatus adopts a centralized plus distributed control architecture. The distributed control means that each energy storage apparatus dispersed throughout the system can respond to frequency and voltage disturbances within their local areas. The centralized control means that the grid-forming energy storage apparatus not only independently participates in frequency and voltage regulation within it local area, but also monitors the frequency and voltage at the common PCC, and adaptively selects the control principle of frequency priority or voltage priority based on the active power surge amount and the reactive power surge amount during disturbance to coordinate the active and reactive power outputs of each energy storage apparatus for reasonable scheduling, to achieve stability of frequency and voltage at the PCC.

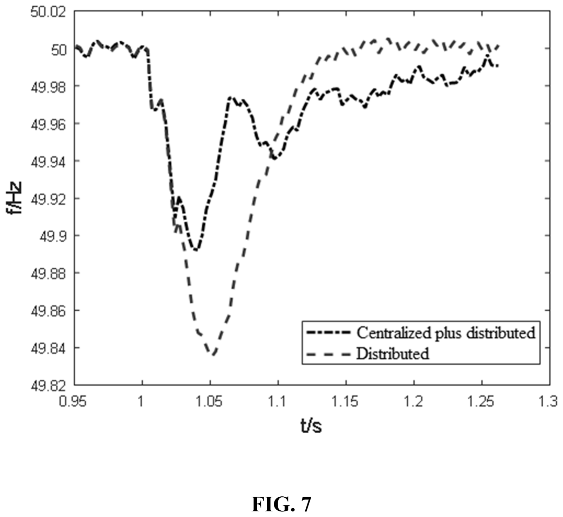

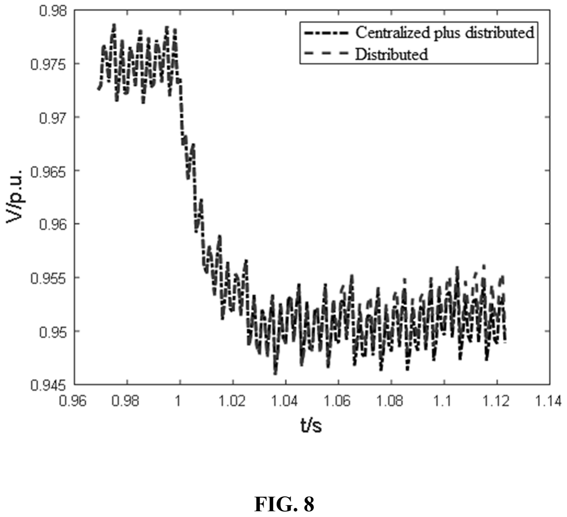

Referring to FIGS. 7 and 8, in the frequency-regulation priority control strategy, the centralized plus distributed control reduces the off-limit degree of the frequency at the cost of a slight increase in the off-limit degree of frequency compared to the conventional distributed control.

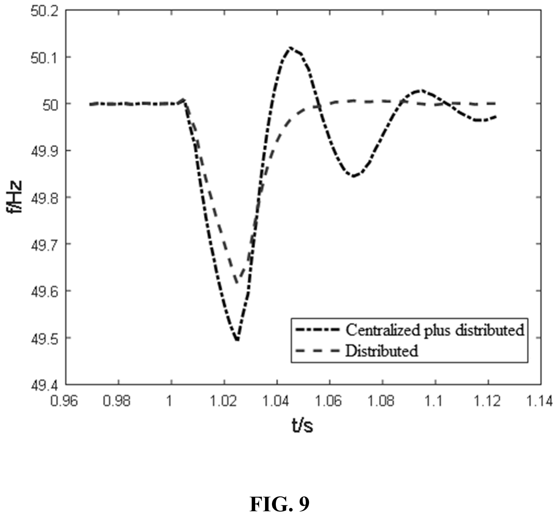

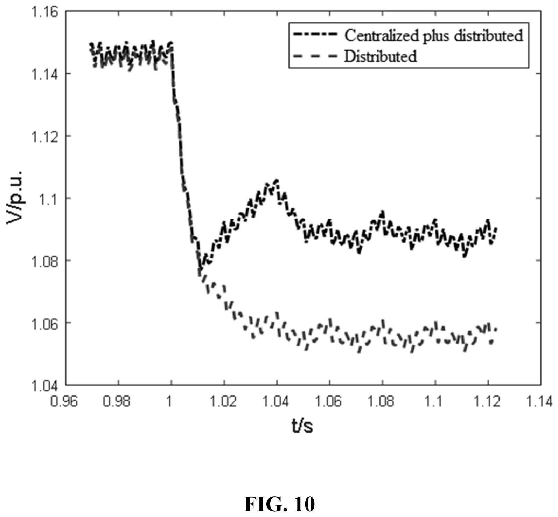

Referring to FIGS. 9 and 10, in the voltage-regulation priority control strategy, the centralized plus distributed control reduces the off-limit degree of the voltage at the cost of a slight increase in the off-limit degree of the frequency compared to the conventional distributed control.

A grid-forming energy storage system is provided according to another embodiment of the present disclosure. Referring to FIG. 1, the grid-forming energy storage system includes: a power plant controller (Power plant Controller, simplified as PPC, not shown in FIG. 1) and at least two grid-forming energy storage apparatuses. The grid-forming energy storage apparatuses are connected to a power grid through a PCC.

In practical applications, the grid-forming energy storage apparatus may include: a grid-forming converter and an energy storage device. The energy storage device is connected to the PCC through the grid-forming converter. The grid-forming converter is a bidirectional DC/DC converter. Furthermore, a transformer may be arranged between the grid-forming converter and the PCC, and multiple grid-forming converters may be connected to the PCC through the same transformer, which is not limited herein.

In addition, the grid-forming energy storage apparatus may further include: a power generation device. The power generation device is connected to the PCC via the grid-forming converter or another grid-forming converter. That is, the power generation device and the energy storage device may be connected to the PCC, through different interfaces of the same grid-forming converter or through their respective grid-forming converters. The connection manner of power generation device depends on the specific application environment. Moreover, the power generation device may be a photovoltaic array, and the grid-forming converter corresponding to the photovoltaic array may be an inverter. The power generation device may be a wind turbine, and the grid-forming converter corresponding to the wind turbine is a wind power converter. The power generation devices in various grid-forming energy storage apparatuses may be the same or different, all of which may fall within the protection scope of the present disclosure.

The specific structure of the grid-forming energy storage apparatus may refer to the conventional technology, which will not be limited herein.

Each grid-forming energy storage apparatus is controlled by the power plant controller. The power plant controller is configured to execute the control method for the grid-forming energy storage system according to any one of the above embodiments. The process and principle of the control method may be referred to the above embodiments, which will not be described in detail herein.

The same or similar parts among the embodiments in this specification may be referred to each other, and each of the embodiments emphasizes differences from other embodiments. In particular, the system or system embodiment is basically similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be arranged in one place, or distributed over multiple network elements. Some or all of the modules may be selected as needed to achieve the objective of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present disclosure.

Based on the above description of the disclosed embodiments, the features described in the different embodiments in this specification may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

**Claims**

1.  A control method for a grid-forming energy storage system, **characterized in that**, the grid-forming energy storage system comprises at least two grid-forming energy storage apparatuses connected to a power grid through a point of common coupling, PCC; and the control method for the grid-forming energy storage system comprises:

    monitoring a frequency and a voltage at the PCC;
    determining whether the frequency and the voltage at the PCC are off-limit;
    determining, based on changes in an active power and a reactive power of the grid-forming energy storage system, an active-power additional value and a reactive-power additional value of each of the grid-forming energy storage apparatuses, in response to the frequency at the PCC being off-limit and/or the voltage at the PCC being off-limit; and
    for each of the grid-forming energy storage apparatuses, calculating an indicated value of an active power control by adding the active-power additional value of the grid-forming energy storage apparatus to an active-power response value of the grid-forming energy storage apparatus, and calculating an indicated value of a reactive power control by adding the reactive-power additional value of the grid-forming energy storage apparatus to a reactive-power response value of the grid-forming energy storage apparatus.

2.  The control method for the grid-forming energy storage system according to claim 1, wherein the determining, based on changes in an active power and a reactive power of the grid-forming energy storage system, an active-power additional value and a reactive-power additional value of each of the grid-forming energy storage apparatuses comprises:

determining an active power surge ratio and a reactive power surge ratio of a system load, based on the changes in the active power and the reactive power of the grid-forming energy storage system;
determining a cooperative control strategy based on the active power surge ratio and the reactive power surge ratio; and
determining the active-power additional value and the reactive-power additional value of each of the grid-forming energy storage apparatuses based on the cooperative control strategy.

3. The control method for the grid-forming energy storage system according to claim 2, wherein the determining an active power surge ratio and a reactive power surge ratio of the system load, based on the changes in the active power and the reactive power of the grid-forming energy storage system comprises:

determining a total active power and a total reactive power of the system load in a steady-state stage before a disturbance occurs, wherein the disturbance corresponds to the frequency at the PCC being off-limit and/or the voltage at the PCC being off-limit;
determining an active power surge amount and a reactive power surge amount of the system load at a moment when the disturbance occurs; and
determining a ratio of the active power surge amount to the total active power as the active power surge ratio; and determining a ratio of the reactive power surge amount to the total reactive power as the reactive power surge ratio.

4. The control method for the grid-forming energy storage system according to claim 2, wherein the determining a cooperative control strategy based on the active power surge ratio and the reactive power surge ratio comprises:

determining whether the active power surge ratio is greater than a first preset threshold, and determining whether the reactive power surge ratio is greater than a second preset threshold;
determining the cooperative control strategy as a voltage-regulation priority strategy, in response to only the reactive power surge ratio being greater than the second preset threshold; and

determining the cooperative control strategy as a frequency-regulation priority strategy, in response to both the active power surge ratio being greater than the first preset threshold and the reactive power surge ratio being greater than the second preset threshold, or in response to both the active power surge ratio being smaller than or equal to the first preset threshold and the reactive power surge ratio being smaller than or equal to the second preset threshold, or in response to the active power surge ratio being greater than the first preset threshold and the reactive power surge ratio being smaller than or equal to the second preset threshold.

5. The control method for the grid-forming energy storage system according to any one of claims 2 to 4, wherein the determining the active-power additional value and the reactive-power additional value of each of the grid-forming energy storage apparatuses based on the cooperative control strategy comprises:

determining a total active power output of the grid-forming energy storage apparatuses based on an active power-frequency droop control; and determining, in the cooperative control strategy, a total reactive power output of the grid-forming energy storage apparatuses based on a reactive power-voltage droop control;
distributing the total active power output to the respective grid-forming energy storage apparatuses based on a first predetermined distribution method to obtain the active-power addition value of the respective grid-forming energy storage apparatuses; and
distributing the total reactive power output to the respective grid-forming energy storage apparatuses based on a second predetermined distribution method to obtain the reactive-power additional values of the respective grid-forming energy storage apparatuses.

6. The control method for the grid-forming energy storage system according to claim 5, wherein the determining a total active power output of the grid-forming energy storage apparatuses based on an active power-frequency droop control comprises:

calculating a product of a frequency droop coefficient and a difference between a rated frequency at the PCC and a monitored frequency; and
determining a sum of the product and a setting value of a total active power output of the grid-forming energy storage system in the steady-state stage, as the total active-power output.

7. The control method for the grid-forming energy storage system according to claim 5, wherein the determining, in the cooperative control strategy, a total reactive power output of the grid-forming energy storage apparatuses based on a reactive power-voltage droop control comprises:

   calculating a product of a voltage droop coefficient and a difference between a rated voltage at the PCC and a monitored voltage; and
   determining a difference between a setting value of a total reactive power output of the grid-forming energy storage system in the steady-state stage and the product, as the total reactive power output, in response to the cooperative control strategy being the frequency-regulation priority strategy; and
   determining a sum of the setting value of the total reactive power output of the grid-forming energy storage system in the steady-state stage and the product, as the total active power output, in response to the cooperative control strategy being the voltage-regulation priority strategy.

8. The control method for the grid-forming energy storage system according to claim 5, wherein the first predetermined distribution method comprises an average distribution method.

9. The control method for the grid-forming energy storage system according to claim 5, wherein the second predetermined distribution method comprises: a proportional distribution method based on differences in terminal voltage and rated voltage of the grid-forming energy storage apparatuses.

10. The control method for the grid-forming energy storage system according to any one of claims 1 to 4, wherein the determining whether the frequency and the voltage at the PCC are off-limit comprises:

    determining whether the frequency at the PCC is within a preset frequency range, and determining whether the voltage at the PCC is within a preset voltage range;
    determining that the frequency at the PCC is off-limit, in response to the frequency at the PCC outside the preset frequency range; and
    determining that the voltage at the PCC is off-limit, in response to the voltage at the PCC outside the preset voltage range.

11. The control method for the grid-forming energy storage system according to claim 10, wherein the preset frequency range is ±0.3Hz centered around a grid frequency; and
    the preset voltage range is between 0.9 times and 1.1 times the rated voltage at the PCC.

12. A grid-forming energy storage system, **characterized by**, comprising: a power plant controller and at least two grid-forming energy storage apparatuses, wherein

    the grid-forming energy storage apparatuses are connected to a power grid through a PCC;
    the grid-forming energy storage apparatuses are controlled by the power plant controller, and the power plant controller is configured to execute the control method for the grid-forming energy storage system according to any one of claims 1 to 11.

13. The grid-forming energy storage system according to claim 12, wherein each of the grid-forming energy storage apparatuses comprises a grid-forming converter and an energy storage device; and
    the energy storage device is connected to the PCC via the grid-forming converter.

14. The grid-forming energy storage system according to claim 12, wherein each of the grid-forming energy storage apparatuses further comprises: a power generation device; and
    the power generation device is connected to the PCC via the grid-forming converter or another grid-forming converter.

PCC

Grid-forming
energy storage
apparatus

- - - - - - - - -

Grid-forming
energy storage
apparatus

**FIG. 1**

```
                    ┌─────────────┐
                    │    Start    │
                    └──────┬──────┘
                           │
       ┌───────────────────┤
       │                   ▼
       │   ┌───────────────────────────────────────────┐    S101
       │   │  The frequency and voltage at the PCC      │
       │   │  are monitored                             │
       │   └──────────────────┬────────────────────────┘
       │                      │
       │                      ▼              S102
       │            ╱────────────────────╲
       │  No       ╱   Whether the         ╲
       ├──────────◄   frequency and the     ►
       │           ╲  voltage at the PCC is ╱
       │            ╲    off-limit         ╱
       │             ╲──────────┬─────────╱
       │                        │ Yes
       │                        ▼
       │   ┌───────────────────────────────────────────┐    S103
       │   │ An active-power additional value and a     │
       │   │ reactive-power additional value of each    │
       │   │ of the grid-forming energy storage         │
       │   │ apparatuses are determined, based on       │
       │   │ changes in active power and reactive       │
       │   │ power of the grid-forming energy storage   │
       │   │ system                                     │
       │   └──────────────────┬────────────────────────┘
       │                      │
       │                      ▼
       │   ┌───────────────────────────────────────────┐    S104
       │   │ For each grid-forming energy storage       │
       │   │ apparatus, an indicated value of an        │
       │   │ active power control is calculated by      │
       │   │ adding the active-power additional value   │
       │   │ of the grid-forming energy storage         │
       │   │ apparatus to an active-power response      │
       │   │ value of the grid-forming energy storage   │
       │   │ apparatus, and an indicated value of a     │
       │   │ reactive power control is calculated by    │
       │   │ adding the reactive-power additional       │
       │   │ value of the grid-forming energy storage   │
       │   │ apparatus to a reactive-power response     │
       │   │ value of the grid-forming energy storage   │
       │   │ apparatus                                  │
       │   └──────────────────┬────────────────────────┘
       │                      │
       │                      ▼
       │               ┌─────────────┐
       │               │     End     │
       │               └─────────────┘
```

**FIG. 2**

Start

The frequency and voltage at the PCC are monitored — S101

S102 — Whether the frequency and the voltage at the PCC is off-limited

No

Yes

S103

An active power surge ratio and a reactive power surge ratio of a system load are determined, based on the changes in the active power and the reactive power of the grid-forming energy storage system — S201

A cooperative control strategy is determined based on the active power surge ratio and the reactive power surge ratio — S202

The active-power additional value and the reactive-power additional value of each grid-forming energy storage apparatus are determined based on the cooperative control strategy — S203

For each grid-forming energy storage apparatus, an indicated value of an active power control is calculated by adding the active-power additional value of the grid-forming energy storage apparatus to an active-power response value of the grid-forming energy storage apparatus, and an indicated value of a reactive power control is calculated by adding the reactive-power additional value of the grid-forming energy storage apparatus to a reactive-power response value of the grid-forming energy storage apparatus — S104

End

**FIG. 3**

A total active power and a total reactive power of the system load in a steady-state stage before a disturbance occurs are determined, where the disturbance corresponds to the frequency and/or the voltage at the PCC being off-limit — S301

An active power surge amount and a reactive power surge amount of the system load at a moment when the disturbance occurs are determined — S302

A ratio of the active power surge amount to the total active power is determined as the active power surge ratio; and a ratio of the reactive power surge amount to the total reactive power is determined as the reactive power surge ratio — S303

**FIG. 4**

S401

Only $\dfrac{\Delta Q}{Q_{sum}} > \varepsilon_2$  Whether $\dfrac{\Delta P}{P_{sum}} > \varepsilon_1$ and $\dfrac{\Delta Q}{Q_{sum}} > \varepsilon_2$  Other cases

The cooperative control strategy is determined as a voltage-regulation priority strategy — S402

The cooperative control strategy is determined as a frequency-regulation priority strategy — S403

**FIG. 5**

S501

The total active power output of the grid-forming energy storage apparatuses is determined based on the active power-frequency droop control

The total reactive power output of the grid-forming energy storage apparatuses is determined in the cooperative control strategy based on the reactive power-voltage droop control

S502

The total active power output is distributed to the respective grid-forming energy storage apparatuses based on a first predetermined distribution method to obtain the active-power additional values of the respective grid-forming energy storage apparatuses

S503

The total reactive power output is distributed to the respective grid-forming energy storage apparatuses based on a second predetermined distribution method to obtain the reactive power additional value of the respective grid-forming energy storage apparatuses

**FIG. 6**

**FIG. 7**

**FIG. 8**

**FIG. 9**

**FIG. 10**

## INTERNATIONAL SEARCH REPORT

| International application No. |
| --- |
| **PCT/CN2023/117942** |

| A. | CLASSIFICATION OF SUBJECT MATTER |
| --- | --- |

H02J3/28(2006.01)i

According to International Patent Classification (IPC) or to both national classification and IPC

| B. | FIELDS SEARCHED |
| --- | --- |

Minimum documentation searched (classification system followed by classification symbols)

IPC:H02J3/-

Documentation searched other than minimum documentation to the extent that such documents are included in the fields searched

Electronic data base consulted during the international search (name of data base and, where practicable, search terms used)

CNABS. CNTXT, ENTXT, VEN, IEEE, CNKI: 比例, 变化, 变流, 并网点, 波动, 补偿, 储能, 电流, 电压, 调频, 调压, 叠加, 阀值, 附加, 功率, 构网, 频率, 若干, 突变, 无功, 限值, 优先, 有功, 越限, 占比, 阈值, GFM, pcc, power, limit, current, active, power, overrun, storage, exceed, freq, grid-forming, negative, voltage, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116599096 A (SUNGROW POWER SUPPLY (NANJING) CO., LTD.) 15 August 2023 (2023-08-15)<br>claims 1-14 | 1-14 |
| A | CN 115513995 A (BEIJING SIFANG PROJECT CO., LTD.; BEIJING SIFANG AUTOMATION CO., LTD.) 23 December 2022 (2022-12-23)<br>description, paragraphs 76-220, and figures 1-5 | 1-14 |
| A | CN 115986774 A (BEIJING HONGPUHUI INFORMATION TECHNOLOGY CO., LTD.) 18 April 2023 (2023-04-18)<br>description, paragraphs 35-116, and figures 1-5 | 1-14 |
| A | CN 115313524 A (CHINA ELECTRIC POWER RESEARCH INSTITUTE CO., LTD.) 08 November 2022 (2022-11-08)<br>entire document | 1-14 |
| A | CN 115730468 A (SOUTHEAST UNIVERSITY; JIANGSU PROVINCE PRODUCTIVITY PROMOTION CENTER) 03 March 2023 (2023-03-03)<br>entire document | 1-14 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 December 2023** | **09 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/117942** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 115800340 A (CHINA ELECTRIC POWER RESEARCH INSTITUTE CO., LTD.) 14 March 2023 (2023-03-14)<br>entire document | 1-14 |
| A | US 2021210957 A1 (BATTELLE MEMORIAL INSTITUTE) 08 July 2021 (2021-07-08)<br>entire document | 1-14 |

Form PCT/ISA/210 (second sheet) (July 2022)

## INTERNATIONAL SEARCH REPORT
### Information on patent family members

International application No.

**PCT/CN2023/117942**

| Patent document cited in search report | | | Publication date (day/month/year) | Patent family member(s) | | | Publication date (day/month/year) |
|---|---|---|---|---|---|---|---|
| CN | 116599096 | A | 15 August 2023 | None | | | |
| CN | 115513995 | A | 23 December 2022 | None | | | |
| CN | 115986774 | A | 18 April 2023 | None | | | |
| CN | 115313524 | A | 08 November 2022 | None | | | |
| CN | 115730468 | A | 03 March 2023 | None | | | |
| CN | 115800340 | A | 14 March 2023 | None | | | |
| US | 2021210957 | A1 | 08 July 2021 | CA | 3100374 | A1 | 22 May 2021 |
| | | | | CA | 3100374 | C | 19 September 2023 |
| | | | | US | 11515704 | B2 | 29 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310538743